# EUROPÄISCHE PATENTANMELDUNG

(11) **EP 1 926 269 A1**
(43) Veröffentlichungstag der Anmeldung: **28.05.2008**
(21) Anmeldenummer: 06024381.3
(22) Anmeldetag: 24.11.2006
(51) Int. Cl.: H04L 27/26, H03D 3/00

(54) **Verfahren zur Vermeidung von Spiegelübersprechen zwischen den Subträgern eines OFDM-Systems aufgrund von I/Q-Imbalance**

(71) Anmelder: Nokia Siemens Networks GmbH & Co. KG, 81541 München (DE); Fraunhofer-Gesellschaft zur Förderung der angewandten Forschung e.V., 80686 München (DE)
(72) Erfinder: Haustein, Thomas, 81735 München (DE)

(57) **Zusammenfassung**

Zur Vermeidung von Spiegelübersprechen der Subträger in einem OFDM-System, wird ein Verfahren vorgestellt, bei dem ein zu übertragendes aus Datensymbolen (N) bestehendes Quellensignal vor der zu anzuwendenden IFFT auf mehrere disjunkte - im Frequenzsinne orthogonale - Träger aufgeteilt wird und dann parallel über verschiedene Frequenzen zu einem Demultiplexer in zwei Seitenbändern (B_{U},B_{L}) übertragen wird, wobei der zu einem mit Datensymbolen (1,N) geladenen Träger eines Seitenbandes korrespondierenden Spiegelträger in dem anderen Seitenband nicht mit Datensymbolen geladen wird.

## Beschreibung

Die vorliegende Erfindung betrifft ein Verfahren zur Vermeidung von Spiegelübersprechen in einem OFDM-System gemäss dem Oberbegriff des Patentanspruches 1.

Im folgenden wird anstelle einer deutschen Nichtfachsprache teilweise eine englischsprachige Fach-Nomenklatur sowie die gängigen Akronyme benutzt, wie z.B.
- OFDM: Orthogonal Frequency Division Multiplexing;
- RF: Radio Frequency;
- FFT: Fast Fourier Transform Transform;
- IFFT: Inverse Fast Fourier Transform;
usw.

Durch die Verwendung solcher Fachbegriffe und geläufiger Akronyme lassen sich Unklarheiten vermeiden. Eine Liste der verwendeten Akronyme, Abkürzungen und Begriffe am Schluss dieses Dokumentes bildet einen integralen Bestandteil dieser Schrift.

Moderne Kommunikationssysteme verwenden Mehrträgerverfahren und Multi-Antennensysteme. Die OFDM-Techniken ermöglichen eine einfache Kanalentzerrung in Frequenzbereich, besonders in frequenzselektiven Kanälen. Ein zyklischer Prefix, das sogenannte Guardintervall, sorgt für Orthogonalität der einzelnen OFDM-Subträger. Orthogonalität heisst hier disjunkte Träger. Das Guardintervall wird derart dimensioniert, dass die zeitliche Kanalimpulsantwort eines OFDM-Symbols innerhalb des Guardintervalls abgeklungen ist, so dass sogenannte Intersymbolinterferenz ISI von aufeinanderfolgenden OFDM-Symbolen ausgeschlossen ist. Die Länge des Guardintervalls ist somit durch den physikalischen Kanal bestimmt und nicht durch die Wahl der Wellenform (z.B. OFDM oder CDMA) bestimmt. Die Bezeichnung «zyklisch» bezieht sich auf die Art und Weise wie das Guardinterval mit Signalen belegt wird. Da die FFT am Empfänger zur korrekten Rekonstruktion des durch die IFFT am Sender erzeugten Wellenform einen zyklischen Abschluss des zeitlichen Empfangssignales benötigt, wird das durch die IFFT am Sender erzeugte Zeitsignal zyklisch um die Länge des Guardintervalls fortgesetzt, indem die k Zeitsamples vom Ende des Signals an den Anfang kopiert werden. Somit kann am Empfänger eine zeitliche Verschiebung innerhalb des Guardintervalls zugelassen werden ohne die zyklische Eigenschaft des empfangenen OFDM-Signals verletzt zu haben. In der Praxis werden üblicherweise mindestens 3 Mal so viele Subträger wie Kanaltaps (Kanaltaps bezeichnen die Anzahl der relevanten Zeitsamples der Kanalimpulsantwort) verwendet, damit der effektive Kanalpro Subträger als frequenzflach , d.h. frequenzunabhängig, angesehen werden kann. Mit steigender Subträgeranzahl kann bei konstanter Guardintervalllänge der Kapazitätsverlust durch den Guardintervall-Overhead reduziert werden. Das Guardintervall ist eine Art nicht genutzte Redundanz, um dafür eine strenge Orthogonalität der Subträger und keine ISI zu erhalten.

Kommerzielle OFDM-Systeme, z.B. WLAN nach IEEE 802.11a/g, arbeiten mit etwa 20 MHz Bandbreite und ca. 80% der Subträger werden zur Datenübertragung genutzt. Um die Datenrate zu erhöhen, können entweder mehrere Antennen oder mehr Bandbreite verwendet werden. Bei sehr großen Basisbandsignalbandbreiten von z.B. 100 MHz oder mehr, sind digitales Hoch- und Runtermischen schwer möglich, somit sind das direkte Hochmischen aus dem Basisband und das direkte Heruntermischen ins Basisband (direct downconversion receiver) gute Optionen zur Problemlösung: Beim Mischen eines Datensignals, welches ein spezifisches Spektrum hat, mit einer RF-Trägerfrequenz entstehen im Frequenzbereich Summen und Differenzsignale, d.h. nach dem Hochmischen ergibt sich ein Spektrum, welches um die Trägerfrequenz herum symmetrisch ist.

Bei Verwendung kostengünstiger RF-Komponenten entstehen so genannte Signalimbalancen für die komplex-wertigen Anteile des Basisbandsignals. Diese I/Q-Imperfektionen bewirken in OFDM-Systemen ein Übersprechen von Signalen der Spiegelfrequenzen, siehe dazu [2]. Bezogen auf die FFT / IFFT spricht man von den Frequenzen -f...+f, d.h. jeder Subträger hat ein «gespiegeltes» Äquivalent auf der anderen Seite des Nullträgers DC. Der nullte Sub-träger der IFFT /FFT wird immer exakt auf die Mischfrequenz des Lokaloszillators der RF gemappt (=abgebildet) und stellt dort den DC-Offst dar. Aus diesem Grunde kann er auch nur ein reell-wertiges Signal aufnehmen.

Dies gilt sowohl beim direkten Hochmischen als auch beim direkten Runtermischen. Dieses Übersprechen hängt von der Güte der verwendeten Hardware-Komponenten ab und bestimmt bei kostengünstigen Lösungen häufig die Gesamtperformanz des Systems. In Single-Carrier Systemen bewirkt I/Q-Imbalance ein Übersprechen zwischen dem Real- und Imaginärteil des Signals. Dieses Signalübersprechen zwischen Real- und Imaginärteil lässt sich jedoch einfach durch reellwertige Verarbeitung der SISO oder MIMO Signale erreichen. Dies kostet dann einen zusätzlichen Aufwand um den Faktor 2, wenn Matrix-Vektormultiplikationen in reeller Weise durchgeführt werden.

In OFDM Systemen können die Signalverzerrungen durch I/Q-Imbalancen nicht separat auf jedem Subträger kompensiert werden aufgrund des Spiegelträgerübersprechens. Ähnlich der reell-wertigen Signalverarbeitung SP kann auch mit dem Spiegelträgerübersprechen verfahren werden. Hierbei müssen die Signale auf einem Träger -f und seinem Spiegelträger +f stets gemeinsam verarbeitet werden. Dies würde den SP-Aufwand ebenfalls um den Faktor 2 steigern, allerdings wachsen die zu verarbeitenden MIMO-Matrizen ebenfalls um den Faktor 2 in jeder Dimension und häufig zum Einsatz kommende Algorithmen zur Berechnung von Gewichtsmatrizen zur MIMO-Entzerrung wie Matrixinversion oder QR-Zerlegung haben einen Aufwand - N³, somit verachtfacht sich der Rechenaufwand für eine doppelt große Kantenlänge der Matrix. Unter Berücksichtigung der Tatsache, dass nur halb so viele Matrizen zu bearbeiten sind, ergibt sich ein zusätzlicher Aufwand um den Faktor 4, welcher bei breitbandiger Echtzeitverarbeitung (Basisbandsignale mit 100MHz Signalbandbreite) und hohen Antennenzahlen (größer 4 Antennen auf jeder Seite) nicht vernachlässigbar ist.

Die Auswirkungen der vorgenannten I/Q-Imperfektionen sind in [1] dargestellt.

Auf Spiegelträgerunterdrückung in der Signalverarbeitung (SP) kann in Abhängigkeit von der verwendeten Modulation verzichtet werden, falls die Phasen- und Amplitudenimbalance klein genug ist: wenige Grad in der Phase und wenige Prozent in der Amplitude. Dies ist unrealistisch für kostengünstige Komponenten.

Das Problem des Spiegelträgerübersprechens wurde bisher wie folgt gelöst:
i) Bei geringen Bandbreiten von 20 MHz und somit auch geringen Taktraten in der digitalen Signalverarbeitung kann das Spiegelträgerübersprechen mit digitalem Hoch-(Digital Up-Conversion (DUC)) und digitalem Runtermischen (Digital Down-Conversion (DDC)) umgangen werden.
ii) Bei höheren Bandbreiten (z.B. 100 MHz und mehr) geht das auf Grund der begrenzten Taktraten im FPGA und bei den ADCs und DACs nur noch schwer, deshalb werden entweder teure vorkompensierte Hardware-Komponenten verwendet oder eine zusätzliche Signalverarbeitung (SP) im Basisband muss nach einer geeigneten Kalibrierung durchgeführt werden.

Die der vorliegenden Erfindung zugrunde liegende Aufgabe besteht darin, die Performanzdegradation durch Spiegelträgerübersprechen zu vermeiden, ohne aufwendige Signalverarbeitung durchzuführen oder teure Hardware zu verwenden.

Diese Aufgabe wird für ein Verfahren der eingangs genannten Art durch die im Patentanspruch 1 angegebenen Merkmale gelöst.

Durch die erfindungsgemässe Lösung, wonach
«der zu einem mit Datensymbolen (1, N) geladenen Träger korrespondierenden Spiegelträger nicht mit Datensymbolen geladen wird.»,
wird der performanzdegradierende Effekt des Spiegelträgerübersprechens dadurch vermieden, dass der jeweilige Spiegelträger kein Signal aufweist und das Übersprechen bleibt aus. Vorteilhaft an dieser Lösung im Vergleich zu einer Halbseitenbandlösung ist ein sehr ähnliches Spektrum wie bei voller Beladung. Verallgemeinert heißt dies, dass jedes Lademuster auf einem Seitenband zulässig ist, solange das andere Seitenband nicht «beladen» ist.

Das angegebene Verfahren eignet sich prinzipiell für alle OFDM-basierten Übertragungsverfahren. Hierbei wäre z.B. der WLAN Markt mit low-cost Lösungen ein wesentlicher Zielbereich, aber auch moderne zellulare Mobilfunkstandards z.B. 3GPP-LTE, WiMAX etc. welche auf der OFDM-Übertragung aufbauen. So kann der Zugang für das gesamte Übertragungsband oder für frequenzsymmetrische Teile davon im TDMA-Zugriff betrieben werden. Das erfindungsgemäße Verfahren, also das Weglassen von Spiegelträgern bei der Übertragung, eignet sich insbesondere für Systeme die keine extremen Anforderungen an die spektrale Effizienz haben, bzw. um kostengünstige lowend-Geräte einfach mit in das bestehende Netz einzubinden.

In einer konkreten Anwendung kann ein Terminal durch ein vereinbartes Signalisierungsbit melden, ob es spiegelträgerfrei unterstützt werden möchte oder nicht. Dies erlaubt, auch sogenannte «low cost devices» für breitbandige (d.h. Bandbreite > 20MHz) oder hochmodulierte ( <16QAM) - OFDM-Übertragung einzusetzen.

Auf diese Weise kann der Durchsatz erhöht werden indem verwendete Bandbreite gegen höhere Modulation abgetauscht werden kann. Auf Grund der Tatsache, dass im frequenzselektiven Kanal bestimmte Frequenzbereiche einen niedrigeren effektiven SINR aufweisen können, kann auf diese Bereiche gezielt verzichtet werden bei der Übertragung und eventuell der frequenzgespiegelte Bereich bei höherer Modulation und mit doppelter Leistung genutzt werden. Die innerhalb ein- und derselben Bandbreite erzielte spektrale Effizienz muss also nicht notwendig durch das Weglassen von Spiegelträgern reduziert sein.

Vorteilhafte Ausgestaltungen der Erfindung sind in weiteren Ansprüchen angegeben.

Eine Erläuterung der Grundlagen und ein Ausführungsbeispiel der Erfindung wird nachfolgend anhand der Zeichnung näher erläutert. Dabei zeigen:
- Figur 1: Prinzip einer OFDM - Übertragungsstrecke;
- Figur 2A: 1. Beispiel der Trägeranordnung im oberen/unteren Seitenband;
- Figur 2B: 2. Beispiel der Trägeranordnung im oberen/unteren Seitenband;
- Figur 2C: 3. Beispiel der Trägeranordnung im oberen/unteren Seitenband;
- Figur 2D: 4. Beispiel der Trägeranordnung im oberen/unteren Seitenband;
- Figur 2E: 5. Beispiel der Trägeranordnung im oberen/unteren Seitenband;
- Figur 2F: 6. Beispiel der Trägeranordnung im oberen/unteren Seitenband.

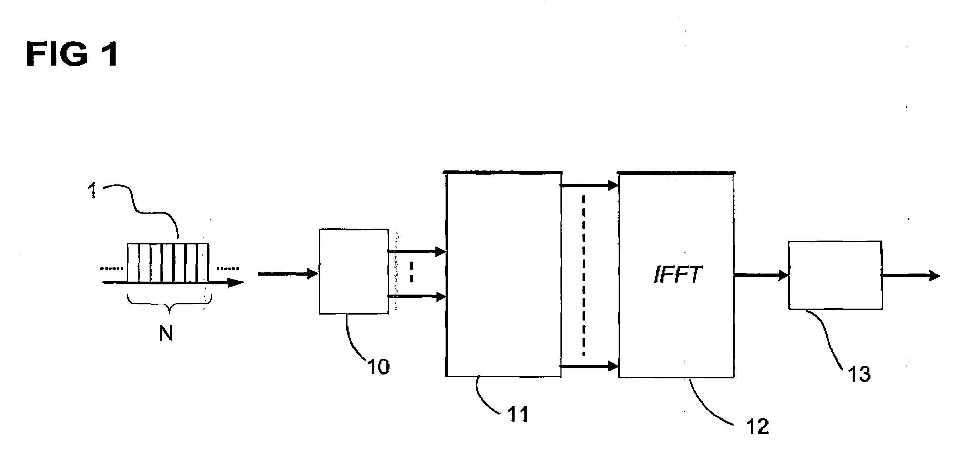

Figur 1 zeigt das Prinzip einer OFDM - Übertragungsstrecke: Ein mit Datensymbolen 1 aufweisendes Wort der Länge N wird in einem S2P-Converter 10 in einen parallelen Strom von Datensymbolen 1 aufgeteilt. Diese Datensymbole nun parallel vorliegenden Datensymbole 1 werden in einem Trägermapper 11 den einzelnen um den Nullträger DC liegenden Trägern zugewiesen. Nach erfolgtem Mapping auf geeignete Sub-träger und Einfügen von Nullen auf allen anderen Trägern wird durch eine IFFT 12 eine Transformation in den Zeitbereich vorgenommen und in der zyklische Präfix-Einfügung 13 mit dem sogenannten Guardintervall wird für die Orthogonalität der einzelnen OFDM-Subträger gesorgt.

Die verschiedene Ausführungsformen der vorliegenden Erfindung werden durch die Trägerzuordnung 11 vorgenommen, in dem die codierten Datensymbole bestimmten Trägern gemäß dem erfindungsgemäßen Verfahren zugewiesen werden.

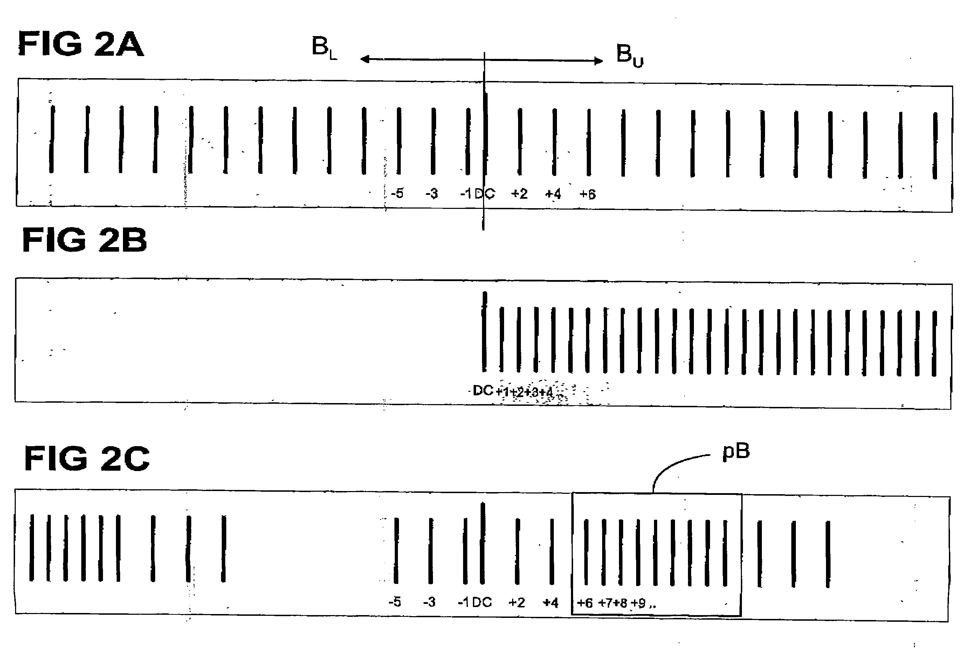

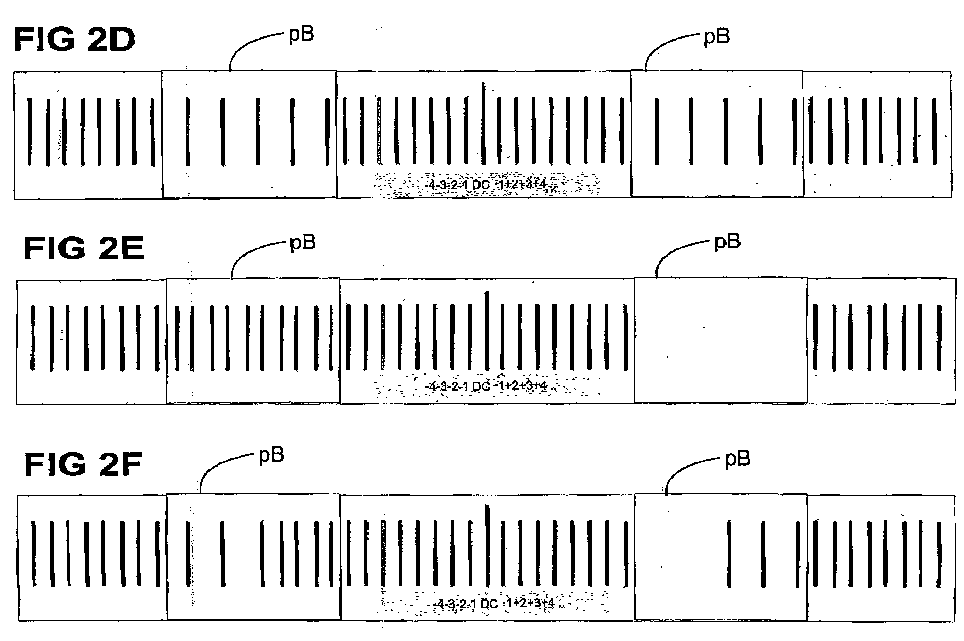

Dazu wird auf die Darstellungen im Frequenzbereich gemäss den Figuren 2A bis 2F Bezug genommen.

Um den Nullträger DC (Trägerfrequenz) ist das obere Seitenband B_{U} und das untere Seitenband B_{L} angeordnet (Aus Einfachheitsgründen nur in Figur 2A so dargestellt). Die Träger sind vom Nullträger aus numeriert mit +2, +4, usw. für geradzahlige Nummern im oberen Seitenband B_{L} und mit -1, -3, usw. im unteren Seitenband B_{L}. Gemäss Figur 2A die eine erste Ausführungsform der vorliegenden Erfindung repräsentiert, sind zur Vermeidung des Spiegelübersprechens im oberen Seitenband B_{U} Träger mit geradzahliger Nummer und im unteren Seitenband B_{L} Träger mit ungeradzahliger Nummer mit Datensymbolen versehen.

Eine besondere Ausführungsform der vorliegenden Erfindung ergibt sich gemäss Figur 2B mit einer Einseitenband-Modulation, wo also alle Träger nur in einem Seitenband mit Datensymbolen geladen werden.

Eine Weiterbildung der Zuordnung ist der Figur 2C zu entnehmen, wo ein bestimmter Bereich im einen Seitenband nicht benutzt wird, stattdessen sind im entsprechend gespiegelten Bereich im anderen Seitenband Träger mit aufeinanderfolgender Nummerierung mit Datensymbolen geladen.

Die vorstehend aufgeführte Zuordnung der Träger zu den Seitenbändern B_{U} und B_{L} eignet sich insbesondere für die Nutzung hoher Modulationsformate z.B. 64qam oder höher

Die Figuren 2D bis 2F geben eine Trägerzuordnung zu den Seitenbändern wieder, die für den Mehrbenutzer Zugang besonders vorteilhaft sind, weil verschiedene Nutzer unterschiedliche Güteklassen des RF-interface verwenden können; weil für teure Hardware oder bei aufwendigerer Signalprozessierung alle Träger verwendet werden können. Für sogenannte billige Hardware ist vorzusehen, dass das Spiegelträgerübersprechen zu vermeiden ist.

Nachstehend werden die Vorteile der verschiedenen Ausführungsformen der vorliegenden Erfindung summarisch nochmals wieder gegeben.
1. Spiegelträgerübersprechen bei FFT / IFFT Verarbeitung ist ausgeschlossen, da das Spiegelträger-Pendant jeweils nicht moduliert wird.
2. Es können sehr hohe Modulationsformate verwendet z.B. 64-/256-QAM werden, welche in klassischen Einträgerverfahren auf Grund der I/Q Imbalance nicht möglich wären. Bei Verwendung von OFDM mit perfekter Spiegelträgerunterdrückung gibt es hier keine Einschränkungen, da I/Q-Imbalancen sich nicht auf den einzelnen Träger auswirken.
3. Bei Verwendung der gesamten Bandbreite kann die gesamte Frequenzdiversität des frequenzselektiven Kanals ausgenutzt werden. Dies ist insbesondere mit Hinblick auf sehr breite Frequenzbänder relevant z.B. UWB.
4. Kanaladaptive Übertragung mit hohen Modulationsformaten kann prinzipiell unterstützt werden mit der einzigen Einschränkung, dass die Spiegelträger von sehr guten Frequenzressourcen ungenutzt bleiben müssen. Im Fall eines einseitig degradierten SINR bleibt der vollen Durchsatz wie im spiegelträgerfreiem System erhalten, da die degradierten Ressourcen durch das adaptive Ressourcenmanagement (inklusive adaptiver Modulation und Codierung (AMC)) ohnehin nicht genutzt werden würden.
5. Bei Verwendung nur jedes zweiten Subträgers ergibt sich eine höher Toleranz gegenüber Dopplerverschiebungen (relevant bei hohen Geschwindigkeiten.)
6. Ein UE kann durch ein vereinbartes Bit signalisieren, ob es in der Lage ist, das volle OFDM Spektrum in entsprechende Güte zu senden bzw. zu empfangen oder ob es mit der spiegelträgerfreien Übertragungsversion unterstützt werden soll.
7. Das Prinzip ist ohne Einschränkungen auf MIMO erweiterbar.
8. Die Leistung pro Träger kann bei der spiegelträgerfreien Übertragung verdoppelt werden bei Einhaltung der gesamt abgestrahlten Sendeleistung und dadurch eventuell direkt für eine höhere Modulationsordnung genutzt werden.
9. Das Verfahren kann gemischt mit Vollbandnutzung betrieben werden, wenn für die spiegelträgerfreie Übertragung bestimmte frequenz-syzametrische Bänder verwendet werden.

Ein Terminal bzw. Gerät muss zur Durchführung des vorliegenden Verfahrens in der Lage sein, solche Signalmappinganforderungen einer Basisstation oder umgekehrt zu signalisieren, da dadurch auch nicht-OFDM fähige RF-Komponenten mit OFDM-Signalen umgehen können, ohne dass die Performanz auf den benutzten Subträgern leidet. Das diese Signalisierung ermöglichende Bit ist vorzugsweise durch einen Standard zu vereinbaren. Dadurch ist auch eine einfache Nachweisbarkeit der Benutzung des vorliegenden Verfahrens sichergestellt, da alle standardkompatiblen Geräte/Terminals dieses Bit nicht nur senden können müssen, sondern auch in Empfangsrichtung diese Information korrekt auswerten können.

### Liste der verwendeten Bezugszeichen; Glossar

- 1: Datensymbole
- 10: Seriell zu Parallel-Wandler, S2P-Converter
- 11: Träger-Mapper; Trägerzuordnung
- 12: Inverse Fast Fourier Transformation
- 13: Zyklische Präfix-Einfügung (Guardintervall)
- B_{L}: Unteres Seitenband
- B_{U}: Oberes Seitenband
- DC: Nullträger, Trägerfrequenz
- pB: Teil eines Seitenbandes; fester Frequenzbereich eines Seitenbandes; Teil eines oberen oder unteren korrespondierenden Seitenbandes,
«partial Band»
- N: Anzahl Datensymbole

### Liste der verwendeten Akronyme

- CDMA: Carrier Division Multiple Access
- DDC: Digital Down-Conversion
- DUC: Digital Up-Conversion
- FFT: Fast Fourier Transform
- I/Q: Inphase component & Quadrature component (Real & Imaginary part)
- IEEE: the Institute of Electrical and Electronics Engineers, Inc.
- IFFT: Inverse Fast Fourier Transform
- ISI: Intersymbolinterferenz
- MIMO: Multiple Input Multiple Output
- SC-FDMA: Single Carrier Frequency Division Multiple Access
- SISO: Single Input Multiple Output
- OFDM: Orthogonal Frequency Division Multiplexing
- QR: Decomposition of a matrix H into a unitary matrix Q and a upper right triangular matrix R.
- RF: Radio Frequency
- SINR: Signal to Interference plus Noise Ratio;
- SP: Signal Processing

### Literaturliste

http://www.vodafone-chair.com
[1] Dirty RF: A New Paradigm
   Gerhard Fettweis et al.
   Technische Universität Dresden, Vodafone Chair Mobile
   Communications Systems; D-01062 Dresden.
   Publiziert unter http://www.vodafone-chair.com
[2] Performance Degradation de to I/Q Imbalance in Multi-Carrier Direct Conversion Receivers:
   A Theoretical Analysis
   Marcus Windisch, Gerhard Fettweis
   Dresden University of Technology; Vodafone Chair Mobile Communications Systems; D-01062 Dresden.
   Publiziert unter http;//www.vodafone-chair.com

## Patentansprüche

1. Verfahren zur Vermeidung von Spiegelübersprechen in einem OFDM-System, bei dem ein zu übertragendes aus Datensymbolen (1, N) bestehendes Quellensignal vor der anzuwendenden Inverse Fast Fourier Transform (IFFT) auf mehrere disjunkte - im Frequenzsinne orthogonale - Träger aufgeteilt wird (11) und dann parallel über verschiedene Frequenzen übertragen wird,
**dadurch gekennzeichnet, dass**
der zu einem mit Datensymbolen (1, N) geladenen Träger korrespondierenden Spiegelträger nicht mit Datensymbolen geladen wird.

2. Verfahren nach Anspruch 1,
**dadurch gekennzeichnet, dass**
die Übertragung über Frequenzen in zwei Seitenbändern (B_{U}, B_{L}) erfolgt, wobei im einen Seitenband (B_{U}, B_{L}) Träger mit geradzahliger Trägernummer (+2, +4, +6, ..) und im anderen Seitenband (B_{U}, B_{L}) Träger mit ungeradzahliger Trägernummer (-1, -3, -5, ..) verwendet werden.

3. Verfahren nach Anspruch 2,
**dadurch gekennzeichnet, dass**
Trägernummern in den beiden Seitenbändern (B_{U}, B_{L}) je aufeinanderfolgend (-1, -3, -5, ..; +2, +4, +6, ..) sind.

4. Verfahren nach Anspruch 1,
**dadurch gekennzeichnet dass**
die Übertragung über Frequenzen ausschliesslich in einem Seitenband (B_{U}, B_{L}) mit Trägern (+1, +2, +3, ..) erfolgt.

5. Verfahren nach Anspruch 4,
**dadurch gekennzeichnet, dass**
Träger mit aufeinanderfolgenden Trägernummern (+1, +2, +3, ..) verwendet werden.

6. Verfahren nach Anspruch 1,
**dadurch gekennzeichnet, dass**
die Übertragung über Frequenzen in zwei Seitenbändern (B_{U}, B_{L}) erfolgt, wobei in einem festen Frequenzbereich (pB) eines Seitenbandes (B_{U}, B_{L}) Träger mit aufeinanderfolgenden Trägernummern (+1, +2, +3, ..) verwendet werden.

7. Verfahren nach Anspruch 1,
**dadurch gekennzeichnet, dass**
die Übertragung über Frequenzen ausschliesslich in einem festen Frequenzbereich (pB) eines Seitenbandes (B_{U}, B_{L}) und dem korrespondierenden Frequenzbereich (pB) des anderen Seitenbandes (B_{U}, B_{L}) erfolgt.

8. Verfahren nach Anspruch 1,
**dadurch gekennzeichnet, dass**
die Übertragung über Frequenzen ausschliesslich in einem festen Frequenzbereich (pB) eines Seitenbandes (B_{U}, B_{L}) erfolgt.

9. Verfahren nach Anspruch 8,
**dadurch gekennzeichnet, dass**
alle Träger im festen Frequenzbereich (pB) des einen Seitenbandes (B_{U}, B_{L}) mit Datensymbolen geladen werden.

10. Verfahren nach einem der Ansprüche 1 bis 9,
**dadurch gekennzeichnet, dass**
ein dieses Verfahren benutzende Gerät in wenigstens einem Bit zu einem Partnergerät signalisiert, dass es in der Lage ist, spiegelträgerfrei zu empfangen oder zu senden.
